Europäisches Patentamt

(19) European Patent Office

Office européen des brevets

(11) Numéro de publication  0 000 307

A1

(12) # DEMANDE DE BREVET EUROPEEN

(21) Numéro de dépôt: 78400027.5

(22) Date de dépôt: 21.06.78

(51) Int. Cl.²: **B 29 D 3/02, B 29 D 23/00, E 21 F 1/04**

---

(30) Priorité: 24.06.77 FR 7719397

(43) Date de publication de la demande:
**10.01.79 Bulletin 79/1**

(84) Etats contractants désignés:
**DE GB SE**

(71) Demandeur: SAMIFER, S.R.L. (Société Auxiliare des Mines de Fer de France),
15bis, rue de Marignan,
F-75008 Paris (FR)

(84) Etats contractants désignés:
**DE GB SE**

(71) Demandeur: S.A.E.I. CELTITE Société Anonyme,
8, Boulevard Carnot,
F-21009 Dijon (FR)

(84) Etats contractants désignés:
**DE GB SE**

(72) Inventeur: Sinou, Pierre,
18, Avenue du Roi de Rome,
F-54150 Briey (FR)

(74) Mandataire: Bletry, Robert,
2, Boulevard de Strasbourg,
F-75010 Paris (FR)

---

(54) **Procédé de construction de parois minces de forme quelconque, notamment de parois pour la canalisation de fluides.**

(57) Le procédé selon l'invention est essentiellement caractérisé en ce qu'on approxime, au moyen d'au moins une surface réglée, la forme souhaitée pour la paroi mince, en ce qu'on définit, de façon connue en soi, cette surface réglée au moyen de segments de droites, ces segments de droites étant constitués par des portions de câbles tendus entre deux points de fixation, en ce qu'on fixe sur ces portions de câbles une enveloppe constituée d'un matériau souple, et en ce qu'on applique sur cette enveloppe un revêtement durcissant.

Ce procédé est utilisable notamment pour la réalisation de diffuseur, de déflecteur ou de barrages d'air.

Croydon Printing Company Ltd.

EP 0 000 307 A1

0000307

## Procédé de construction de parois minces de forme quelconque, notamment de parois pour la canalisation de fluides.

Le déplacement des fluides nécessite, quelle que soit la vitesse de circulation de ceux-ci, une énergie non négligeable, et le rendement des installations de circulation de fluide est fortement lié à la forme et à la rugosité des parois de guidage.

Il est connu par ailleurs que le changement de section des canaux de circulation de fluide provoque, en faisant apparaître des points singuliers, des turbulences génératrices d'importantes pertes de charges.

On diminue généralement l'effet de ces points singuliers en prévoyant des diffuseurs ou autres surfaces de guidage constituées de parois minces, préformées ou établies sur place.

Le transport de ces formes préfabriquées peut poser de nombreux problèmes, notamment lorsque leurs dimensions sont supérieures aux dimensions des passages permettant l'accès au site de montage de ces surfaces.

Par ailleurs, la fabrication sur place de ces formes peut également poser des problèmes d'encombrement puisque cette fabrication nécessite, à l'heure actuelle, le découpage et la mise en forme de surfaces planes dont l'aire peut être importante.

Le but de la présente invention est essentiellement de faire apparaître, pour un faible coût, une grande facilité de réalisation, sur place, de telles formes, sans se heurter aux problèmes d'exiguïté des sites de montage de ces surfaces ou des accès à ces sites.

L'invention consiste en une application, à caractère industriel de la remarque selon laquelle ces formes, malgré éventuellement une certaine complexité, se rattachent cependant à la famille des surfaces réglées, telles que troncs de cône, cylindres, hyperboloïdes, paraboloïdes, hyperboliques, conoïdes, etc., c'est-à-dire des surfaces correspondant à l'enveloppe d'un certain ensemble de droites dans l'espace.

Le procédé selon l'invention est essentiellement caractérisé en ce qu'on approxime, au moyen d'au moins une surface réglée, la forme souhaitée pour la paroi mince de conduction de fluide, en ce qu'on définit, de façon connue en soi, cette surface réglée au moyen de segments de droites, ces segments de droites étant constitués par des portions de câbles tendus entre deux points de fixation, en ce qu'on fixe sur ces portions de câbles une enveloppe constituée d'un matériau souple, et en ce qu'on applique sur cette enveloppe un revêtement durcissant.

Les câbles utilisés sont de préférence des câbles en acier (câbles torsadés ou cordes à piano) présentant donc une résistance mécanique élevée.

Il peut être commode de choisir les points de fixation des câbles régulièrement espacés sur des figures planes situées dans deux plans différents. Ainsi, pour réaliser un diffuseur de ventilateur dans une galerie de mine, on peut tendre les câbles entre des orifices percés dans la bride de sortie du ventilateur et des plots scellés dans les parois de la galerie. Suivant l'emplacement relatif des points de fixation choisis, on réalise une carcasse de tronc de cône ou d'hyperboloïde.

L'enveloppe que l'on drape et fixe sur les câbles tendus est de préférence constituée par un filet ou une résille à mailles lâches, par exemple carrées et réalisées au moyen de fils de matière plastique. En effet, bien qu'on puisse utiliser une toile ou un voile, l'emploi d'un filet à mailles lâches carrées permet, à cause de la possibilité de déformation des mailles selon leurs diagonales, de suivre plus facilement la surface définie par les câbles, et de réduire la nécessité de former des plis dans l'enveloppe.

Sur l'enveloppe mise en place, on projette par exemple, à l'aide d'un pistolet, un produit plastique à polymérisation rapide choisi de manière que la paroi mince qu'il forme ait, après durcissement, les qualités mécaniques requises pour résister aux contraintes apparaissant à l'utilisation.

Le revêtement durcissant peut également être une résine aminoplaste armée de fibres textiles ou de fibres de verre.

Après durcissement, la paroi terminée peut être polie si nécessaire.

Le procédé de l'invention peut être appliqué à la réalisation soit de diffuseurs permettant de raccorder un ventilateur de grandes dimensions à une soufflerie de galerie de mine ou même à cette galerie, soit de barrages s'opposant totalement ou partiellement au passage de l'air et installés dans les galeries de mines, soit de déflecteurs dérivant au moins partiellement un courant d'air.

Il est du reste bien entendu que le mode de réalisation décrit ci-dessus a été donné à titre d'exemple et que des modifications accessibles à l'homme de l'art peuvent y être apportées sans sortir pour autant du cadre de la présente invention.

TROIS PAGES.                    P/P de SAMIFER (Société Auxiliaire des Mines de Fer de France),Société à responsabilité limitée, et S.A.E.I., Société Anonyme.


Le Mandataire : OFFICE BLETRY

## REVENDICATIONS DE BREVET

1.- Procédé de construction de parois minces de forme quelconque, permettant notamment la réalisation sur place de telles parois, caractérisé en ce qu'on approxime ladite forme au moyen d'au moins une surface réglée, en ce qu'on définit, de façon connue en soi, cette surface réglée au moyen de segments de droites, ces segments de droites étant constitués par des portions de câbles tendus entre deux points de fixation, en ce qu'on fixe sur ces portions de câbles une enveloppe constituée d'un matériau souple et en ce qu'on applique sur cette enveloppe un revêtement durcissant.

2.- Procédé suivant la revendication 1, caractérisé en ce qu'on utilise, en tant qu'enveloppe, un filet à mailles lâches.

3.- Procédé suivant la revendication 1 ou 2, caractérisé en ce qu'on utilise, en tant qu'enveloppe, un filet à mailles carrées.

4.- Procédé suivant l'une quelconque des revendications 1 à 3, caractérisé en ce qu'on utilise des câbles en acier.

5.- Procédé suivant l'une quelconque des revendications précédentes, caractérisé en ce qu'on projette sur l'enveloppe une résine et des fibres.

6.- Procédé suivant la revendication 5, caractérisé en ce qu'on utilise, en tant que revêtement durcissant, une résine aminoplaste armée de fibres.

7.- Procédé suivant l'une quelconque des revendications 1 à 6, caractérisé en ce qu'on polit la paroi après durcissement du revêtement.

UNE PAGE.

P/P de SAMIFER (Société Auxiliaire des Mines de Fer de France), Société à ressabilité limitée, et S.A.E.I., Société Anonyme.

Le Mandataire : OFFICE BLETRY

Office européen des brevets

RAPPORT DE RECHERCHE EUROPEENNE

0000307

| Catégorie | Citation du document avec indication, en cas de besoin, des parties pertinentes | Revendication concernée |
|---|---|---|
| | DE - A - 1 915 654 (LENZEN) <br> * Le brevet en entier * <br><br> --- <br><br> FR - A - 1 413 808 (LICENTIA PATENT VERWALTUNG) <br> * Le brevet en entier * <br><br> --- <br><br> FR - A - 2 071 759 (PFLEGER) <br> * Page 2, ligne 25 à page 3, ligne 5 * <br><br> --- | 1 <br><br><br><br><br> 1 <br><br><br><br><br><br> 1,6 |
| A | DE - B - 1 185 561 (BLECHWARENFABRIK) | 1 |
| | DE - C - 21 940 (F.PELZER) | 1 |

CLASSEMENT DE LA DEMANDE (Int. Cl.)

B 29 D
B 29 D
E 21 F

DOMAINES TECHNIQUES RECHERCHES (Int. Cl.)

E 21 F 1/00
E 21 F 1/04
E 21 F 1/08
F 24 F 13/02
B 29 D 3/02
B 29 D 23/00

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche <br> La Haye | Date d'achèvement de la recherche <br> 02-10-1978 | Examinateur <br> VAN PELLEGHEM |
|---|---|---|